**Europäisches Patentamt**

**European Patent Office**

**Office européen des brevets**

(19)

(11) Numéro de publication : **0 328 445 B1**

(12)

# FASCICULE DE BREVET EUROPEEN

(45) Date de publication du fascicule du brevet :
**29.07.92 Bulletin 92/31**

(51) Int. Cl.$^5$ : **G21C 7/20**

(21) Numéro de dépôt : **89400331.8**

(22) Date de dépôt : **06.02.89**

(54) **Mécanisme de commande à amortisseur pour barre absorbante de réacteur nucléaire.**

(30) Priorité : **11.02.88 FR 8801643**

(43) Date de publication de la demande :
**16.08.89 Bulletin 89/33**

(45) Mention de la délivrance du brevet :
**29.07.92 Bulletin 92/31**

(84) Etats contractants désignés :
**BE CH DE ES GB LI SE**

(56) Documents cités :
**FR-A- 1 344 992**
**FR-A- 2 070 797**
**FR-A- 2 311 287**
**FR-A- 2 339 937**

(73) Titulaire : **FRAMATOME**
**Tour Fiat 1, Place de la Coupole**
**F-92400 Courbevoie (FR)**

(72) Inventeur : **Chevereau, Gérard**
**84 rue Thiers**
**F-93340 Le Raincy (FR)**

(74) Mandataire : **Fort, Jacques et al**
**CABINET PLASSERAUD 84, rue d'Amsterdam**
**F-75009 Paris (FR)**

EP 0 328 445 B1

Jouve, 18, rue Saint-Denis, 75001 PARIS

## Description

La présente invention concerne les mécanismes de commande de barre absorbante pour réacteur nucléaire refroidi par un liquide, comprenant une tige portant la barre et déplaçable verticalement dans les équipements internes fixes du réacteur et un dispositif d'amortissement de chute de la tige, à cylindre hydraulique et piston. L'invention trouve une application particulièrement importante, bien que non exclusive, dans les réacteurs refroidis et modérés par de l'eau sous pression.

Des mécanismes de commande du type ci-dessus défini sont largement utilisés dans les réacteurs nucléaires. La barre est en général constituée d'une "araignée" à bras rayonnants munie d'un pommeau et de crayons absorbants fixés aux bras et qui contiennent un poison neutronique. Le déplacement des barres permet de commander la réactivité dans le coeur du réacteur. Pour provoquer un arrêt d'urgence du réacteur, on insère simultanément toutes les barres en libérant leurs mécanismes de commande de façon que les barres tombent sous l'action de leur propre poids. Le dispositif d'amortissement vise à limiter le choc lors de la venue en butée du pommeau contre la plaque supérieure de coeur du réacteur ou contre l'embout supérieur de l'assemblage combustible avec lequel la barre est associée.

On peut reprocher à la plupart des dispositifs d'amortissement d'avoir une efficacité insuffisante et/ou d'opposer une perte de charge excessive à l'écoulement du liquide de refroidissement. Le document EP-A-159 509 par exemple décrit une barre de commande dont le dispositif d'amortissement se limite à un cylindre ménagé dans le pommeau et dans lequel coulisse un piston repoussé dans une position de saillie vers le bas par des moyens élastiques contenus dans le cylindre. Le freinage par compression du ressort et laminage du liquide chassé du cylindre à travers le jeu entre piston et cylindre varie pendant la course, ce qui nuit à l'efficacité ; le volume de l'amortisseur doit rester faible, ce qui interdit de lui donner une course importante.

La présente invention vise à fournir un mécanisme de commande à dispositif d'amortissement répondant mieux que ceux antérieurement connus aux exigences de la pratique, notamment en ce qu'il présente une efficacité de freinage accrue à course du piston donnée et garantit le réarmement du dispositif.

Le préambule des revendications indépendantes est fondé sur le mécanisme de commande de barre absorbante décrit dans FR-A-2 311 387.

Dans ce but l'invention propose notamment un mécanisme conforme aux revendications 1 et4.

Dans un premier mode de réalisation, le cylindre est fixé de façon démontable dans les internes supérieurs et le piston est monté coulissant dans ce cylindre, la tige comportant un renflement formant marteau et destiné à venir frapper le piston lorsque la tige, dans sa descente, atteint la position haute du piston.

Dans un autre mode de réalisation, le cylindre et la tige sont munis de moyens coopérants permettant à la tige de soulever le cylindre et les internes supérieurs comprennent des moyens de butée destinés à recevoir le cylindre et à le retenir lorsque la tige, dans son mouvement de descente, atteint un niveau déterminé.

Quel que soit le mode de réalisation, le piston reste en permanence contenu dans le cylindre, dans lequel il peut coulisser sur une longueur très inférieure à l'amplitude du mouvement de descente de la tige correspondant à la chute de la barre qu'elle porte. En conséquence, un passage libre de grande section peut être réservé autour de la tige sur la plus grande partie de sa longueur et le liquide occupant les internes supérieurs peut s'échapper librement sans freiner la descente de la barre au cours de la majeure partie du déplacement de cette dernière (ce qui est souhaitable pour que l'insertion des barres se fasse aussi rapidement que possible). Les problèmes que poserait le guidage du piston s'il devait s'engager dans le cylindre sont écartés. Néanmoins le dispositif amortisseur, étant placé dans les internes, peut avoir une longueur importante, ce qui améliore la progressivité de l'amortissement, sans inconvénient du point de vue de l'encombrement.

Le dispositif d'amortissement hydraulique qui vient d'être décrit est avantageusement complété par un dispositif mécanique absorbeur de chocs intervenant en fin de course du dispositif amortisseur hydraulique.

L'invention sera mieux comprise à la lecture de la description qui suit de modes particuliers de réalisation donnés à titre d'exemples non limitatifs. La description se réfère aux dessins qui l'accompagnent, dans lesquels :

– la Figure 1 est un schéma simplifié montrant, en coupe suivant un plan vertical, les organes concernés par l'invention d'un mécanisme de commande suivant un premier mode de réalisation, les pièces étant montrées dans la disposition qu'elles occupent en cours d'amortissement ;

– les Figures 2 et 3, similaires à la Figure 1, montrent des variantes de réalisation.

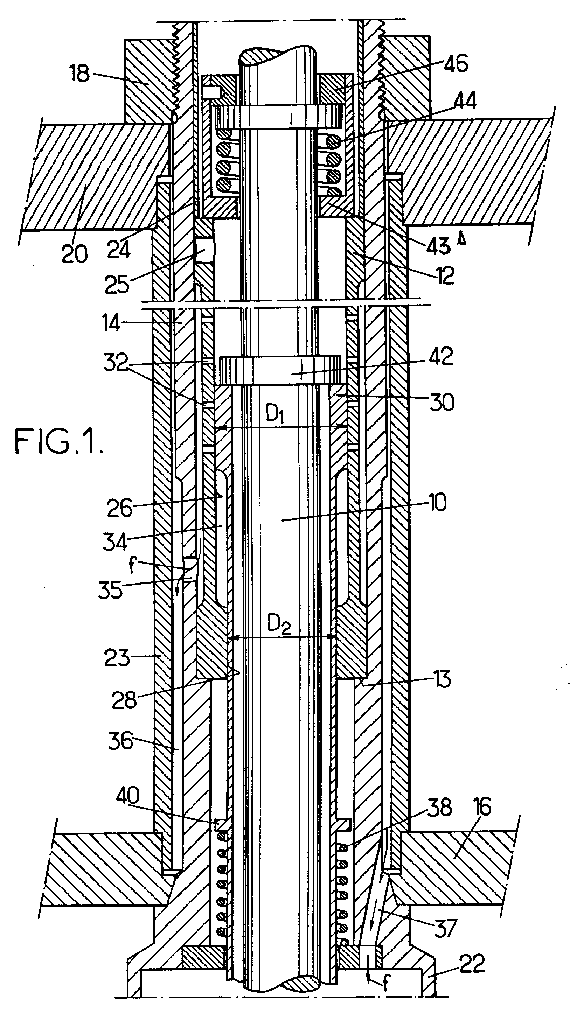

Le mécanisme de commande représenté en partie sur la Figure 1 est destiné à freiner la chute d'une tige 10, à laquelle est accrochée une barre de commande non représentée, dans un réacteur à eau pressurisée. La tige est déplaçable verticalement par un moteur, généralement électro-magnétique, entourant une gaine faisant saillie au-dessus du couvercle de la cuve du réacteur. Ce dernier peut avoir l'une quelconque des constitutions maintenant courantes.

Le dispositif amortisseur comprend un cylindre 12 qui, dans le cas montré en figure 1, est fixé de façon démontable dans les équipements internes supérieurs du réacteur, placés au dessus du coeur. Le cylindre 12 représenté occupe une fraction seulement de la hauteur des internes supérieurs. Il est placé à l'intérieur d'une entretoise tubulaire 14 et prend appui sur un épaulement 13 de l'alésage interne de cette entretoise. L'entretoise 14 traverse l'ensemble des internes depuis la plaque intermédiaire 16 sur laquelle elle s'appuie jusqu'au dessus de la plaque supérieure 20. Elle est retenue en appui contre la plaque intermédiaire 16 par un écrou 18 s'appuyant sur la plaque supérieure 20. L'entretoise tubulaire 14 se raccorde à un tube de guidage de grappe 22 s'étendant jusqu'au coeur (non représenté).

La tranche inférieure du cylindre 12 est maintenue en appui contre l'épaulement 13 de l'entretoise 14 par une virole 24. Lorsque cette virole est ôtée, le cylindre peut être enlevé, par exemple pour entretien, à l'aide d'un grappin s'engageant dans des trous 25. Un manchon 23 reliant les plaques 16 et 20 entoure l'entretoise 14.

Le cylindre 12 délimite un alésage étagé ayant une partie supérieure 26, de grand diamètre D1, raccordée à une partie inférieure 28, de faible diamètre D2 et de courte longueur. Un piston 30 est monté dans le cylindre 12 et fait saillie vers le bas hors du cylindre. Il comporte une partie haute qui coulisse à frottement doux dans la partie de grand diamètre 26 et une partie basse qui coulisse à frottement doux dans la partie de petit diamètre 28. La partie de grand diamètre 26 est percée de trous 32 de laminage de liquide répartis longitudinalement, progressivement recouverts par la partie de grand diamètre du piston 30 lors de la descente de ce dernier. Le piston et le cylindre délimitent une chambre 34 qui, lorsque le piston est en position haute, s'ouvre à l'extérieur du cylindre par les trous 32 et, dès que le piston arrive dans la position dans laquelle il est montré en figure 1, ne communique plus avec l'extérieur que par le faible jeu qui subsiste entre piston et cylindre.

Le liquide chassé de la chambre 34 par les trous 32 de laminage peut s'écouler vers le réacteur par un trajet indiqué par les flèches f sur la figure 1. Ce trajet comporte un espace annulaire ménagé entre le cylindre 12 et l'entretoise 14, des trous 35 percés dans l'entretoise, un espace annulaire 36 ménagé entre l'entretoise 14 et le manchon 23 et des trous 37 débouchant dans le guide de grappe.

Un ressort de réarmement 38 placé entre une plaque perforée solidaire de l'entretoise 14 et une collerette 40 du piston 30 ramene ce dernier, lorsqu'il est libre, dans une position haute où il découvre l'ensemble des trous 32. La force exercée par le ressort 38 est suffisante pour surmonter le poids du piston mais ne joue pas de rôle significatif dans l'amortissement.

Un renflement circonférentiel 42 de la tige forme marteau et est placé à un niveau tel qu'il frappe la tranche supérieure du piston 30, alors en position haute, en cas de chute de la tige 10.

Le fonctionnement du dispositif apparaît immédiatement. Lorsque la barre de commande et sa tige sont en position haute, le ressort de réarmement 38 maintient le piston 30 dans une position haute, fixée par exemple par l'appui de la collerette 40 contre la tranche inférieure du cylindre. En cas de chute de la barre, le marteau 42 vient frapper le piston et l'enfonce dans le cylindre. La descente est progressivement freinée par le laminage du liquide qui s'échappe de la chambre 34 par les trous 32 successivement recouverts. En même temps le ressort de réarmement 38 se comprime.

Dès que la tige est levée de nouveau, le ressort 38 ramène le piston dans sa position primitive.

Le dispositif montré sur la figure 1 comporte également un absorbeur de chocs mécanique qui intervient en fin de course du dispositif d'amortissement hydraulique. Sur la figure 1 cet absorbeur de chocs est constitué par une butée tubulaire 43 coulissant sur la tige 10 et qu'un ressort d'absorbtion d'énergie 44 tend à ramener dans la position basse où il est montré sur la figure 1. La descente de la butée 43 par rapport à la tige est limitée par l'appui d'un collier 46 solidaire de la butée contre une collerette de la tige.

Le fonctionnement du dispositif absorbeur de chocs apparaît immédiatement : cet absorbeur intervient lorsque la butée vient en contact avec la tranche supérieure du cylindre 12. A partir de ce moment, la tige ne peut plus descendre qu'en comprimant le ressort d'absorbtion mécanique 44, beaucoup plus énergique que le ressort 38.

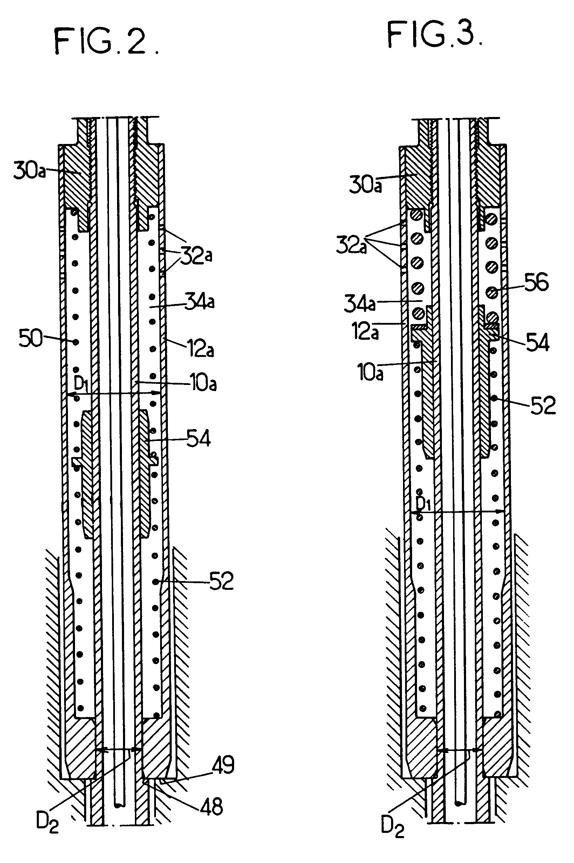

Dans la variante de réalisation montrée en figure 2, le piston 30a est fixé à la tige de commande 10a et le cylindre 12a est prévu pour rester suspendu à la tige jusqu'à ce que cette dernière atteigne, dans sa chute, la position montrée schématiquement en figure 2. Pour cela la tige présente un épaulement 48. Des moyens élastiques sont prévus pour maintenir le cylindre 12a en appui contre l'épaulement 48 jusqu'à ce qu'il vienne en butée contre un épaulement 49 des internes supérieurs. Il comporte, dans le mode de réalisation montré en figure 2, deux ressorts 50 et 52 placés en série et séparés par un guide 54 qui coulisse sur la tige. Le ressort 50 prend appui sur le piston 30a et le ressort 52 prend appui sur un renflement interne du cylindre, qui coulisse sur la tige 10a de façon à délimiter, avec cette dernière et le piston 30a, une chambre d'amortissement 34a. Cette chambre communique avec l'extérieur, lorsque le piston est en position haute, par des trous de laminage 32a répartis le long du cylindre.

Les ressorts 50 et 52 n'ont pour rôle que de maintenir le cylindre en position basse et peuvent en conséquence être très souples. La partie inférieure de l'alésage du cylindre peut présenter un diamètre réduit, de façon que le guide 54 coulisse sur elle lorsqu'il arrive en position basse.

Le dispositif montré en figure 2 ne comporte pas d'absorbeur de chocs mécanique. Un tel absorbeur peut être disposé à un autre emplacement de la liaison entre le mécanisme de commande et la barre, par exemple à l'intérieur du pommeau de grappe.

Le fonctionnement du dispositif apparaît encore immédiatement : lorsque la tige de commande tombe, le cylindre est arrêté par appui sur l'épaulement 49. Le piston 30a s'engage alors progressivement dans le cylindre en refoulant le liquide contenu dans la chambre 34a, laminé au passage par les trous 32a.

Lors de la remontée de la tige de commande 10a, le piston seul remonte au cours d'un premier temps alors que le cylindre, sous l'action de son poids et des ressorts 50 et 52, reste en appui contre l'épaulement 49. A partir du moment où l'épaulement 48 de la tige arrive contre le cylindre, ce dernier suit la tige dans son mouvement ascendant.

La variante de réalisation montrée en figure 3 ne se différencie de celle de la figure 2 que par la présence d'un dispositif absorbeur de chocs mécanique. Sur cette figure (où les organes correspondant à ceux de la figure 2 sont désignés par le même numéro de référence) le ressort de réarmement 50 est remplacé par un ressort 56 de relativement faible longueur à l'état détendu, mais de forte raideur. Lorsque le guide 54 est libre, le ressort de réarmement 52 maintient le guide 54 dans la position montrée en figure 3. Mais en fin de course de l'amortisseur hydraulique, le guide 54 arrive en appui contre le renflement inférieur du cylindre 12a. Le mouvement de descente de la tige ne peut alors plus se poursuivre qu'en comprimant le ressort 56 qui absorbe l'énergie résiduelle de chute.

Par ailleurs, le dispositif suivant l'invention est applicable aux mécanismes de commande de barre de variation de spectre aussi bien que de barre de pilotage.

L'invention est susceptible de nombreuses variantes de réalisation autres que celles qui ont été décrites, notamment présentant un cylindre de diamètre accru ou une constitution différente de l'absorbeur mécanique.

## Revendications

1. Mécanisme de commande de barre absorbante pour réacteur nucléaire refroidi par un liquide, comprenant une tige (10) portant la barre et déplaçable verticalement dans les équipements internes fixes du réacteur et un dispositif d'amortissement de chute de la tige, à cylindre hydraulique (12) et piston (30), le cylindre comportant une partie supérieure de grand diamètre (D1) percée de trous de décharge (32) répartis longitudinalement et une partie inférieure de petit diamètre (D2) et la tige (10) traversant le piston (30) dont la partie haute coulisse à frottement doux dans ladite partie supérieure et délimite avec cette partie supérieure de grand diamètre du cylindre une chambre d'amortissement (34) dont l'échappement comprend les trous de décharge jusqu'à ce qu'ils soient recouverts par le piston lors de la descente de ce dernier, caractérisé en ce que le cylindre (12) est porté par les internes supérieurs, en ce que la partie basse du piston est montée à frottement doux dans ladite partie inférieure, en ce qu'un ressort de réarmement (38) est en appui sur le piston (30) et tend à déplacer le piston dans le cylindre vers une position haute où il découvre les trous de décharge et en ce que la tige (10) comporte un renflement (42) formant marteau et destiné à venir frapper le piston lorsque la tige, dans sa descente, atteint la position haute du piston, et à l'enfoncer dans le cylindre.

2. Mécanisme selon la revendication 1, caractérisé en ce que le cylindre (12) est fixé de façon démontable dans les internes supérieurs.

3. Mécanisme selon la revendication 2, caractérisé en ce que la tige porte un dispositif absorbeur de chocs mécanique, comprenant une butée (43) repoussée par un ressort (44) vers une position basse par rapport à la tige (10) et destinée à venir en butée contre la tranche supérieure du cylindre (12).

4. Mécanisme de commande de barre absorbante pour réacteur nucléaire refroidi par un liquide, comprenant une tige (10a) portant la barre et déplaçable verticalement dans les équipements internes fixes du réacteur et un dispositif d'amortissement de chute de la tige, à cylindre hydraulique (12a) et piston (30a), le cylindre comportant une partie supérieure de grand diamètre (D1) percée de trous de décharge (32a) répartis longitudinalement et une partie inférieure de petit diamètre (D2) et la tige (10a) traversant le piston (30a) dont la partie haute coulisse à frottement doux dans ladite partie supérieure et délimite avec cette partie supérieure de grand diamètre du cylindre une chambre d'amortissement (34a) dont l'échappement comprend les trous de décharge jusqu'à ce qu'ils soient recouverts par le piston lors de la descente de ce dernier, caractérisé en ce que le cylindre (12a) et la tige (10a) sont munis de moyens coopérants (48) permettant à la tige de soulever le cylindre, en ce que les internes supérieurs comprennent des moyens de butée (49) destinés à recevoir le cylindre (12a) et à le retenir lorsque la tige (10a), dans son mouvement de descente, atteint un niveau déterminé et, en ce qu'un ressort de réarmement (52) est en appui sur le piston et tend à déplacer le piston dans le cylindre vers une position haute où il découvre les trous de décharge.

5. Dispositif selon la revendication 4, caractérisé en ce que le ressort de réarmement (52) est placé entre le cylindre et le piston et tend à écarter le piston (30a) de la partie basse de petit diamètre du cylindre.

6. Dispositif selon la revendication 5, caractérisé en ce qu'il comprend un dispositif absorbeur de chocs mécanique comprenant un guide (54) s'appuyant sur la partie inférieure de petit diamètre du cylindre par l'intermédiaire du ressort de réarmement (52) et séparé du piston (30a) par un ressort d'asorbtion (56) de grande raideur et de faible longueur.

## Patentansprüche

1. Steuermechanismus eines Reaktorregelstabs für einen Kernreaktor, der mit einer Flüssigkeit gekühlt wird, mit einer Stange (10), die den Stab trägt und vertikal in den inneren festen Ausrüstungen bzw. Strukturen des Reaktors verschiebbar ist und einer Stoßdämpfervorrichtung des Falls der Stange, mit einem hydraulischen Zylinder (12) und Kolben (30), wobei der Zylinder einen oberen Bereich von großem Durchmesser (D1), der mit Ausbringöffnungen (32) durchsetzt ist, die in Längsrichtung verteilt angeordnet sind, und einen unteren Bereich von geringem Durchmesser (D2) aufweist, und wobei die Stange (10) den Kolben (30) durchquert, deren oberer Bereich unter geringer Reibung in dem oberen Bereich gleitet und mit diesem oberen Bereich von großem Durchesser des Zylinders eine Stoßdämpferkammer (34) begrenzt, dessen Ausgang die Ausbringöffnungen aufweist, bis diese von dem Kolben bedeckt sind beim Absinken des letzteren, dadurch gekennzeichnet, daß der Zylinder (12) durch die oberen Innenstrukturen getragen wird, und daß der untere Bereich des Kolbens unter geringer Reibung in dem unteren Bereich angeordnet ist und daß eine Rückstellfeder (38) in Anlage an den Kolben (30) ist und ihn dazu drängt, sich in eine obere Stellung zu bewegen, wo er die Ausbringöffnungen bedeckt, und daß die Stange (10) eine Verstärkung bzw. einen Wulst (42) aufweist, der einen Hammer bildet und dazu dient, auf den Kolben zu schlagen, wenn die Stange zu ihrem Absenken die hohe Stellung des Kolbens erreicht, um ihn in den Zylinder hineinzudrücken.

2. Mechanismus nach Anspruch 1, dadurch gekennzeichnet, daß der Zylinder (12) auf entfernbare Weise in den oberen Innenstrukturen angeordnet ist.

3. Mechanismus nach Anspruch 2, dadurch gekennzeichnet, daß die Stange eine mechanische Stoßdämpfervorrichtung trägt, die einen Anschlag (43) aufweist, der durch eine Feder (44) in eine untere Stellung bezüglich der Stange (10) gedrückt wird und dazu dient, in Anschlag gegen den oberen Teil des Zylinders (12) zu kommen.

4. Steuermechanismus eines Reaktorregelstabs für einen Kernreaktor, der mit einer Flüssigkeit gekühlt wird, mit einer Stange (10a), die den Stab trägt und vertikal in den inneren festen Ausrüstungen bzw. Strukturen des Reaktors verschiebbar ist und einer Stoßdämpfervorrichtung des Falls der Stange, mit einem hydraulischen Zylinder (12a) und Kolben (30a), wobei der Zylinder einen oberen Bereich von großem Durchesser (D1), der mit Ausbringöffnungen (32a) durchsetzt ist, die in Längsrichtung verteilt angeordnet sind, und einen unteren Bereich von geringem Durchesser (D2) aufweist, und wobei die Stange (10a) den Kolben (30a) durchquert, deren oberer Bereich unter geringer Reibung in dem oberen Bereich gleitet und mit diesem oberen Bereich von großem Durchesser des Zylinders eine Stoßdämpferkammer (34a) begrenzt, dessen Ausgang die Ausbringöffnungen aufweist, bis diese von dem Kolben bedeckt sind beim Absinken des letzteren, dadurch gekennzeichnet, daß der Zylinder (12a) und die Stange (10a) mit zusammenwirkenden Einrichtungen (48) versehen sind, die der Stange erlauben, den Zylinder anzuheben, daß die oberen Innenstrukturen/Anschlageinrichtungen (49) aufweisen, die dazu dienen, den Zylinder (12a) aufzunehen und ihn zurückzuhalten, wenn die Stange (10a) in ihrer Absenkbewegung ein vorbestimmtes Niveau erreicht, und daß eine Rückstellfeder (52) in Anschlag ist gegen den Kolben und dazu drängt, den Kolben in dem Zylinder in eine obere Stellung zu bewegen, wo er die Ausbringöffnungen bedeckt.

5. Vorrichtung nach Anspruch 4, dadurch gekennzeichnet, daß die Rückstellfeder (52) zwischen dem Zylinder und dem Kolben gesetzt ist und dazu tendiert, den Kolben (30a) von dem unteren Bereich des kleinen Durchmessers des Zylinders wegzubringen.

6. Vorrichtung nach Anspruch 5, dadurch gekennzeichnet, daß sie eine mechanische Stoßdämpfervorrichtung aufweist, die eine Führung (54) aufweist, die sich auf den unteren Bereich des kleinen Durchmesser des Zylinders mittels der Rückstellfeder (52) abstützt und getrennt ist vom Kolben (30a) durch eine Absorptionsfeder (56) von großer Steifigkeit und geringer Länge.

## Claims

1. Absorbent bar control mechanism for liquid cooled nuclear reactor, comprising a rod (10) supporting the bar and movable vertically in the fixed internal equipments of the reactor and a device for absorbing the shock of the fall of the rod, having a hydraulic cylinder (12) and a piston (30), the cylinder comprising an upper portion of large diameter (D1) formed with discharge holes (32) spaced longitudinally and a lower portion of small diameter (D2) and the rod (10) passing through the piston (30) whose top portion has a sliding fit in said upper portion and defines, with said large diameter upper portion of the cylinder, a shock absorbing chamber (34) whose exhaust comprises the discharge holes until they are covered by the piston during the downward movement thereof, characterized in that the cylinder (12) is carried by the upper internals, in that the low part of the piston has a sliding fit in said lower portion, in that a reset spring (38) bears on the piston (30) and tends to move the piston within the cylinder towards a top position where it uncovers the discharge holes and in that the rod (10) comprises a swelling (42) forming a hammer and intended to strike the piston when the rod, in its downward movement, reaches the top position of the piston and to force it into the cylinder.

2. Mechanism according to claim 1, characterized in that the cylinder (12) is removably fixed in the upper internals.

3. Device according to claim 2, characterized in that the rod supports a mechanical shock absorbing device, comprising a stop (43) pushed back by a spring (44) to a low position with respect to the rod (10) and intended to come into abutment against the upper surface of the cylinder (12).

4. Absorbent bar control mechanism for liquid cooled nuclear reactor, comprising a rod (10a) supporting the bar and movable vertically in the fixed internal equipments of the reactor and a device for absorbing the shock of the fall of the rod, having a hydraulic cylinder (12a) and a piston (30a), the cylinder comprising an upper portion of large diameter (D1) formed with discharge holes (32a) spaced longitudinally and a lower portion of small diameter (D2) and the rod (10a) passing through the piston (30a) whose top portion has a sliding fit in said upper portion and defines, with the large diameter upper portion of the cylinder, a shock absorbing chamber (34a) whose exhaust comprises the discharge holes until they are covered by the piston during the downward movement thereof, characterized in that the cylinder (12a) and the rod (10a) are provided with cooperating means (48) permitting the rod to raise the cylinder, in that the upper internals comprise abutment means (49) intended to receive the cylinder (12a) and to retain it when the rod (10a), in its downward movement, reaches a given level and in that a reset spring (52) bears on the piston and tends to move the piston within the cylinder towards a high position where it uncovers the discharge holes.

5. Device according to claim 4, characterized in that the reset spring (52) is placed between the cylinder and the piston and tends to move the piston (30a) away from the small diameter lower portion of the cylinder.

6. Device according to claim 5, characterized in that it comprises a mechanical shock absorber device comprising a guide (54) bearing on the small diameter lower portion of the cylinder through the reset spring (52) and separated from the piston (30a) by an absorption spring (56) of high stiffness and short length.

FIG.1.

# FIG.2.

# FIG.3.